# EUROPÄISCHE PATENTSCHRIFT

(11) **EP 1 215 003 B1**
(45) Veröffentlichungstag und Bekanntmachung des Hinweises auf die Patenterteilung: **12.12.2007**
(21) Anmeldenummer: 01127187.1
(22) Anmeldetag: 16.11.2001
(51) Int. Cl.: B23C 5/10

(54) **Schaftfräser für die Bearbeitung von Werkstücken aus Nichteisenmetall oder Kunststoff**
End mill for machining work pieces of non-ferro metals or plastic
Fraise à queue pour l'usinage de pièces en metal non-ferro ou plastique

(30) Priorität: 15.12.2000 DE 20021264 U
(43) Veröffentlichungstag der Anmeldung: 19.06.2002
(73) Patentinhaber: Fette GmbH, 21493 Schwarzenbek (DE)
(72) Erfinder: Thomas, Diethard, Dr., 22926 Ahrensburg (DE)
(74) Vertreter: Hauck Patent- und Rechtsanwälte

(56) Entgegenhaltungen:
- EP-A- 0 155 216
- DE-U- 8 809 699

## Beschreibung

Die Erfindung bezieht sich auf einen Schaftfräser für die Bearbeitung von Werkstücken aus Nichteisenmetall oder Kunststoff nach dem Anspruch 1.

Schaftfräser, dessen Bearbeitungsteil aus schraubenlinienförmigen Schneidkanten mit schraubenlinienförmigen Spannuten dazwischen aufweist, sind allgemein bekannt. Es ist auch bekannt, bei sogenannten Schruppfräsern ein Spanteilerprofil vorzusehen, bei dem die Freifläche durch parallel verlaufende Nuten unterbrochen ist.

Bei der Bearbeitung von Werkstücken aus Nichteisenmetall oder Kunststoff ist erwünscht, einen großen positiven Spanwinkel und einen großen positiven Freiwinkel vorzusehen und zugleich einen relativ kleinen Keilwinkel (scharfes Profil). Die Freifläche liegt im Schnitt gesehen üblicherweise auf einer Spirale. Wird ein großer Spanwinkel und ein großer Freiwinkel angestrebt, wodurch sich ein Keilwinkel von z. B. 40 bis 60° ergibt, wird dadurch die Stabilität des Fräsers beeinträchtigt. Es ist daher ein Kompromiss zu schließen zwischen der Stabilität des Fräsers einerseits und den gewünschten Schneideigenschaften andererseits.

Aus EP-A-0 155 216 und DE-U-88 09 699 ist ein Schaltfräser bekannt geworden, dessen Freiflächen oder Zahnrücken facettenförmig sind derart, dass in Umfangsrichtung gesehen zwei plane Teilflächen geformt sind, die im stumpfen Winkel zueinander angeordnet sind.

Der Erfindung liegt die Aufgabe zugrunde, einen Schaftfräser für die Bearbeitung von Werkstücken aus Nichteisenmetall oder Kunststoff zu schaffen, bei dem optimale Span- und Freiwinkel erhalten werden bei gleichzeitig verbesserter Stabilität des Fräswerkzeugs.

Diese Aufgabe wird durch die Merkmale des Anspruchs 1 gelöst.

Bei der Erfindung sind drei oder mehr Teilflächen vorgesehen. Es versteht sich, dass die Anzahl der Teilflächen, ihre Länge in Umfangsrichtung des Schaftfräsers und der Freiwinkel die Stabilität des Schaftfräsers bestimmt. Die Anzahl von drei oder mehr Teilflächen, die annähernd gleiche Länge aufweisen können, ist jedoch als ausreichend anzusehen. Aufgrund der Erfindung können die Spannuten sehr tief ausgeführt sein, ohne dass dadurch die Stabilität gefährdet wird. Große Spannuten haben bekanntlich eine gute spanabführende Wirkung

Der erfindungsgemäße Schaftfräser ermöglicht einen sehr kleinen Keilwinkel, einen optimalen Span- und Freiwinkel bei gleichzeitig ausreichender Stabilität des Werkzeugteils des Fräsers. Dadurch ist es möglich, auch hohe Zerspanungstiefen bei entsprechenden Schneidenlängen des Schaftfräsers zu erhalten.

Die Winkel, welche die Teilflächen zueinander einschließen, können gleich sein. Es ist jedoch auch möglich, unterschiedliche Winkel zu wählen. Der Spanwinkel im Stirnabschnitt beträgt vorzugsweise 20 bis 25°.

Der erfindungsgemäße Schaftfräser ist vorzugsweise aus Schnellstahl oder Hartmetall geformt. Es versteht sich, dass der erfindungsgemäße Fräser nicht nur als Schlichtfräser, sondern auch als Schruppfräser geeignet ist mit einem Spanteilerprofil, wie es an sich bekannt ist.

Die Erfindung wird nachfolgend anhand eines Ausführungsbeispiels näher erläutert.
Fig. 1 zeigt eine Seitenansicht eines Schaftfräsers nach der Erfindung.
Fig. 2 zeigt einen Stirnschnitt durch den Schaftfräser nach Fig. 1 stark vergrößert.
Fig. 3 zeigt ein Detail von Fig. 2.

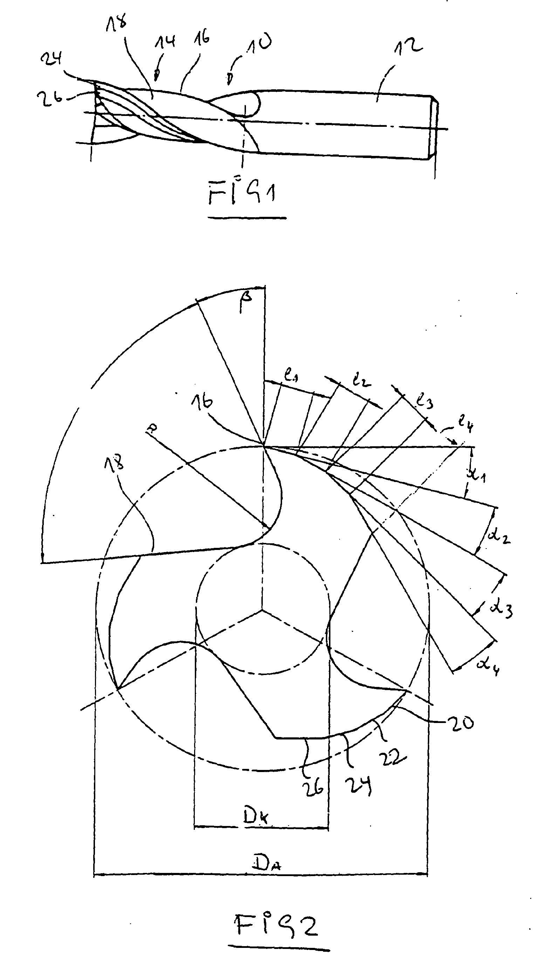

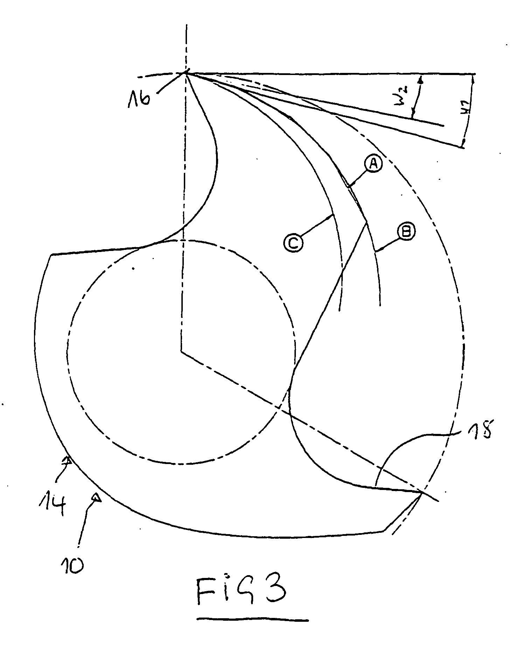

In Fig. 1 ist ein Schaftfräser 10 dargestellt, mit einem Einspannabschnitt 12 und einem Bearbeitungsabschnitt 14, der aus drei schraubenlinienförmigen Schneidkanten 16 besteht, die einen Umfangsabstand von 120° haben und entsprechende Spannuten 18 dazwischen aufweist. Das Profil des Bearbeitungsabschnitts 14 geht deutlicher aus Fig. 2 hervor. Der Außendurchmesser der Schneidkanten ist D_{A} und der Kerndurchmesser D_{K}. Das Verhältnis D_{K} zu D_{A} ist bevorzugt zwischen 0,4 und 0,7. Der Spanwinkel β beträgt bevorzugt 20 bis 25°. Die Freifläche ist in vier Teilflächen 20, 22, 24, 26 unterteilt, die jeweils in Umfangsrichtung hintereinander angeordnet sind. Sie sind plan und werden durch Schleifen hergestellt. Die Länge l₁ bis l₃ der Teilflächen 20 bis 24 im gezeigten Ausführungsbeispiel in Umfangsrichtung des Schaftfräsers 10 gesehen ist gleich. Die Länge der vierten Teilfläche 26 wegen des notwendigen Anschlusses an die nächste Spannut ist etwas größer. Wie ferner zu erkennen, haben die Teilflächen 20 bis 26 jeweils einen Winkel α₁ bis α₄ zueinander von z. B. 15°. Der Freiwinkel α₁ beträgt bevorzugt zwischen 10 und 20°.

Man erkennt, dass der Keilwinkel relativ klein ist und mithin ein scharfes Schneidprofil bildet. Gleichwohl ist jedoch der facettenförmige "Zahn" relativ stabil. Wollte man den gleichen Freiwinkel durch ein balliges Profil, beispielsweise ein spiralförmiges erreichen, würde dadurch eine viel stärkere Schwächung des Schneidprofils herbeigeführt. Dies geht deutlich aus Fig. 3 hervor. Fig. C zeigt den Verlauf des Zahnrückens bei einem Freiwinkel von 15°. Dieser wird mit der Facettenlinie A ebenfalls erreicht. Die dadurch erhaltene Verstärkung des Zahns ist aus der Zeichnung ohne weiteres erkennbar. Würde ein spiralförmiger Zahnrücken gemäß Linie B geformt, würde nur ein Freiwinkel von W₂ = 10° erhalten werden. Der Freiwinkel W₁ in Fig. 3 gibt den für die Facettenlinie A und die spiralförmige Linie C wieder.

Der dargestellte Schaftfräser stellt eine schnittfreudige Geometrie dar und ist auch mit einem Schruppprofil möglich, indem ein bekanntes Spanteilerprofil facettenförmig auf der ersten Teilfläche 20 und einer oder mehreren nachfolgenden Teilflächen 22 bis 26 vorgesehen wird. Der erfindungsgemäße Schaftfräser ermöglicht positive Span- und Freiwinkel sowie scharfkantige Schneiden, so dass geringe Schnittkräfte erforderlich sind. Große Spanräume garantieren einen reibungslosen Spanabfluss. Die Schneiden können mehrfach nachgeschliffen werden.

## Patentansprüche

1. Schaftfräser für die Bearbeitung von Werkstücken aus Nichteisenmetall oder Kunststoff, mit zwei oder mehr schraubenlinienförmigen Schneidkanten (16), zwischen denen schraubenlinienförmige Spannuten (18) gebildet sind, welche mit den Schneidkanten (16) eine Spanfläche bilden, und jeweils einer Freifläche zwischen Schneidkante (16) und nächstfolgender Spannut (18), wobei die Freiflächen oder die Zahnrücken facettenförmig sind derart, dass sie sich im Umfangsrichtung gesehen aus einzelnen annähernd planen Teilflächen (20 bis 26) zusammensetzen, die zueinander im Winkel angeordnet sind, **dadurch gekennzeichnet, dass** drei oder mehr Teilflächen (20 bis 26) vorgesehen sind.

2. Schaftfräser nach Anspruch 1, **dadurch gekennzeichnet, dass** die Teilflächen (20 bis 24) annähernd gleiche Längen (l₁ bis l₃) aufweisen.

3. Schaftfräser nach Anspruch 1 oder 2, **dadurch gekennzeichnet, dass** der Winkel dem Freiwinkel (W bzw. α₁) der ersten Teilfläche (20) annähernd 10 bis 20° beträgt.

4. Schaftfräser nach einem der Ansprüche 1 bis 3, **dadurch gekennzeichnet, dass** der Zahnrücken bis in die nächste Spannut (18) facettenförmig ausgebildet ist.

5. Schaftfräser nach einem der Ansprüche 1 bis 4, **dadurch gekennzeichnet, dass** die Freiwinkel (α₂ bis α₄) der Teilfläche (22 bis 26) kleiner oder größer sind als der der Freiwinkel (α₁) der anderen Teilfläche (20).

6. Schaftfräser nach einem der Ansprüche 1 bis 5, **dadurch gekennzeichnet, dass** der Spanwinkel annähernd 20 bis 25° beträgt.

7. Schaftfräser nach einem der Ansprüche 1 bis 6, **dadurch gekennzeichnet, dass** er aus Schnellstahl (HSS) oder Hartmetall gefertigt ist.

8. Schaftfräser nach einem der Ansprüche 1 bis 6, **dadurch gekennzeichnet, dass** er mit einer harten Beschichtung versehen ist, vorzugsweise mit einer Diamantbeschichtung.

9. Schaftfräser nach einem der Ansprüche 1 bis 8, **dadurch gekennzeichnet, dass** in eine oder mehrere Teilflächen ein Spanteilerprofil geformt ist.

## Claims

1. An end milling cutter for machining workpieces made of a non-ferrous metal or plastic including two or more helically shaped cutting edges (16) between which helically shaped chip flutes (18) are formed which define a chip-cutting face along with the cutting edges, and a tool flank each between the cutting edge (16) and the chip flute (18) which follows next, the tool flanks or tooth backs being facet-shaped such that they are composed of individual reference surfaces (20 to 26) which are approximately planar and are disposed at an angle with respect to each other as viewed in a circumferential direction, **characterized in that** three or more reference surfaces (20 to 26) are provided.

2. The end milling cutter according to claim 1, **characterized in that** the reference surfaces (20 to 24) are of approximately the same lengths (l₁ to l₃).

3. The end milling cutter according to claim 3, **characterized in that** the angle next to the clearance angle (W and α₁, respectively) of the first reference surface (20) is approximately from 10 to 20°.

4. The end milling cutter according to anyone of claims 1 to 3 **characterized in that** the tooth back towards adjacent chip flute (18) is facet-shaped.

5. The end milling cutter according to any one of claims 1 to 4, **characterized in that** the tooth back is formed in a facetted shape extending into the chip flute (18) that follows.

6. The end milling cutter according to any one of claims 1 to 5, **characterized in that** the rake angle is approximately from 20 to 25°.

7. The end milling cutter according to any one of claims 1 to 6, **characterized in that** it is manufactured from a high-speed steel (HSS) or hard cutting metal.

8. The end milling cutter according to any one of claims 1 to 6, **characterized in that** it is provided with a hard coating, preferably a diamond coating.

9. The end milling cutter according to any one of claims 1 to 8, **characterized in that** a chip splitter profile is formed in one or more reference surfaces.

## Revendications

1. Fraise à queue pour l'usinage de pièces en métal non ferreux ou en matière plastique, comportant deux arêtes de coupe (16) ou plus, de forme hélicoïdale, entre lesquelles sont formées des rainures à copeaux (18) de forme hélicoïdale, qui forment avec les arêtes de coupe (16) une surface de coupe, et respectivement une face de dépouille entre l'arête de coupe (16) et la rainure à copeaux (18) suivante, les surfaces de dépouille ou les flancs de dents étant réalisés en forme de facettes, de telle sorte que, par référence au sens périphérique, elles sont formées par différentes surfaces partielles (20 à 26) à peu près planes, qui sont agencées en angle les unes par rapport aux autres, **caractérisée en ce qu'**il est prévu trois surfaces partielles (20 à 26) ou plus.

2. Fraise à queue selon la revendication 1, **caractérisée en ce que** les surfaces partielles (20 à 24) ont à peu près la même longueur (I₁ à I₃).

3. Fraise à queue selon la revendication 1 ou 2, **caractérisée en ce que** l'angle de dépouille (W ou α₁) de la première surface partielle (20) est de l'ordre de 10 à 20° environ.

4. Fraise à queue selon l'une quelconque des revendications 1 à 3, **caractérisée en ce que** les flancs des dents jusque dans la rainure à copeaux (18) suivante sont réalisés en forme de facettes.

5. Fraise à queue selon l'une quelconque des revendications 1 à 4, **caractérisée en ce que** les dépouilles (α₂ à α₄) des surfaces partielles (22 à 26) sont inférieures ou supérieures à la dépouille (α₁) de l'autre face partielle (20).

6. Fraise à queue selon l'une quelconque des revendications 1 à 5, **caractérisée en ce que** l'angle de coupe est de l'ordre de 20 à 25° environ.

7. Fraise à queue selon l'une quelconque des revendications 1 à 6, **caractérisée en ce qu'**elle est réalisée en acier à coupe rapide (HSS) ou en carbure métallique.

8. Fraise à queue selon l'une quelconque des revendications 1 à 6, **caractérisée en ce qu'**elle comporte un revêtement dur, de préférence un revêtement diamanté.

9. Fraise à queue selon l'une quelconque des revendications 1 à 8, **caractérisée en ce qu'**un profil brise-copeaux est formé dans une ou plusieurs surfaces partielles.
